# FASCICULE DE BREVET EUROPEEN

(11) **EP 2 756 746 B1**
(45) Date de publication et mention de la délivrance du brevet: **24.06.2020**
(21) Numéro de dépôt: 13198266.2
(22) Date de dépôt: 19.12.2013
(51) Int. Cl.: A01D 34/68, F16D 67/02

(54) **Equipement motorisé à embrayage amélioré, et dispositif d'embrayage et de freinage correspondant**
Motorisierte Ausrüstung mit verbesserter Kupplung, entsprechende Kupplungs- und Bremsvorrichtung
Motorised equipment with improved clutch, and corresponding clutch and brake device

(30) Priorité: 21.12.2012 FR 1262696
(43) Date de publication de la demande: 23.07.2014
(73) Titulaire: KIVA, 39570 Courbouzon (FR)
(72) Inventeur: Lejeune, Pierre, 85110 Saint-Cécile (FR); Willien, Nicolas, 39230 Sellieres (FR); Renaud, Romaric, 39570 Courbouzon (FR); Gerbaud, Nicolas, 85110 Monsireigne (FR)
(74) Mandataire: Vidon Brevets & Stratégie

(56) Documents cités:
- US-A- 980 313
- US-A- 3 169 358
- US-A- 3 367 459
- US-A- 4 551 967

## Description

### 1. Domaine de l'invention

La présente invention concerne les équipements de travail motorisés à conducteur à pied comportant une transmission à courroie entre le moteur et les outils.

Elle concerne notamment les motofaucheuses à conducteur à pied munies de lames de coupe pour couper et/ou broyer de l'herbe ou des plantes similaires ou des broussailles et de la végétation ligneuse. Les motofaucheuses selon l'invention sont celles qui sont concernées par la norme NF EN 12733 et qui comprennent notamment les broyeurs à fléaux, les faucheuses-broyeuses à conducteur à pied, les débroussailleuses à roues, les motofaucheuses à barre de coupe.

La présente invention concerne plus précisément la transmission entre le moteur et les outils des équipements de travail motorisés à conducteur à pied.

### 2. Art antérieur

Certains équipements de travail motorisés à conducteur à pied comportent une transmission à courroie entre le moteur et les outils, pour permettre l'entrainement des outils. Sur ces équipements, la transmission entre le moteur et les lames peut comprendre un embrayage permettant à l'utilisateur de stopper les lames de coupe sans stopper le moteur.

Ainsi, les motofaucheuses sont des équipements de coupe de végétaux dont les lames ne sont pas en prise directe avec le moteur. Selon les exigences normatives en vigueur, les lames de coupe doivent être stoppées en moins de cinq secondes quand la commande d'embrayage est relâchée par l'utilisateur. Le risque d'accident dû aux lames est ainsi diminué.

De façon classique, la transmission entre le moteur et les lames est réalisée par courroie. Dans ce cas, le mécanisme d'embrayage est généralement réalisé avec un galet apte à tendre la courroie pour la faire passer d'une configuration non tendue dans laquelle elle glisse sur les poulies liées au moteur et aux lames, vers une configuration tendue dans laquelle elle est en prise sur ces poulies. Par ailleurs, le mécanisme d'embrayage doit être associé à un frein permettant de freiner rapidement les lames, quand l'utilisateur relâche l'embrayage.

La longueur des courroies utilisées pour la transmission entre le moteur et les lames peut varier légèrement au cours de l'utilisation des motofaucheuses. Ainsi, les courroies se détendent légèrement au cours de leur durée de vie. De plus, dans certains modèles de motofaucheuses, la hauteur des lames par rapport au sol, appelée hauteur de coupe, est réglable. Dans ce cas, la modification de la hauteur de coupe entraîne généralement une légère modification de l'entraxe entre les poulies liées au moteur et aux lames.

En conséquence, les mécanismes d'embrayage doivent être adaptés pour permettre la mise en prise ou le débrayage efficaces, même quand la courroie présente une longueur légèrement variable. Le frein associé au mécanisme d'embrayage doit également être efficace, quel que soit le niveau de tension de la courroie.

Pour répondre efficacement à ces exigences, les mécanismes d'embrayage mis en œuvre sur les motofaucheuses de l'art antérieur nécessitent un grand nombre de pièces mécaniques complexes, ce qui en fait des dispositifs onéreux, lourd, encombrant et peu ergonomique. Par ailleurs, ces mécanismes d'embrayage mettent en œuvre des ressorts puissants dont les efforts doivent être contrés par l'utilisateur quand il actionne la poignée d'embrayage. En conséquence ces motofaucheuses nécessitent une pression continue et forte de l'utilisateur sur cette poignée, ce qui s'avère rapidement inconfortable.

Le document US4 551 967, publié le 12 Novembre 1985, décrit une tondeuse à gazon comportant un moteur ayant une poulie montée sur son axe entraînant par une courroie 24 des lames en rotation. Lors du freinage, une roue s'avance pour plaquer la courroie contre une pièce en V et ralentir sa course par frottement.

Le document US3169 358, publié le 16 Février 1965, décrit une tondeuse à gazon. L'appui sur une pédale détend la courroie qui anime en rotation les lames et positionne un levier chargé de stopper rapidement la rotation.

Le document US 3 367 459, publié le 06 Février 1968, décrit une tondeuse à gazon poussé par un opérateur marchant. Un bras pivotant met en tension la courroie qui anime en rotation les lames. Pour freiner, le bras pivote pour faire cesser la tension et déclencher l'action d'un patin de frein qui vient serrer la courroie sur la poulie d'entrainement.

Le document US 980 313, publié le 03 Janvier 1911, décrit un système de transmission avec une courroie, sur une bicyclette.

### 3. Objectifs de l'invention

La présente invention a pour objectif de palier ces inconvénients de l'art antérieur.

En particulier, la présente invention a pour objectif de fournir un équipement de travail motorisé à conducteur à pied, par exemple une motofaucheuse, à transmission par courroie qui présente un mécanisme d'embrayage et de freinage fiable et efficace.

Un autre objectif de l'invention est de fournir un tel équipement dont le mécanisme d'embrayage et de freinage soit simple et peu coûteux à mettre en œuvre.

Un autre objectif de l'invention est de fournir un tel équipement dont le mécanisme d'embrayage et de freinage soit fiable et efficace indépendamment du niveau d'usure de la courroie et, pour une motofaucheuse, de la hauteur de coupe choisie.

Un autre objectif de l'invention est de fournir un tel équipement qui assure un bon niveau de confort et de sécurité pour l'utilisateur.

### 4 . Exposé de l'invention

Ces objectifs, ainsi que d'autres qui apparaîtront plus clairement par la suite, sont atteints à l'aide d'un équipement de travail motorisé à conducteur marchant comprenant :
- un moteur, entrainant en rotation une poulie d'entrainement,
- au moins un outil mobile, entrainé par la rotation d'une poulie menée,
- au moins une courroie de transmission, engagée sur lesdites poulies d'entrainement et menée,
l'équipement de travail comprenant également un élément d'embrayage mobile entre :
- une position embrayée, dans laquelle il exerce sur ladite courroie une tension suffisante pour l'empêcher de patiner sur lesdites poulies,
- une position débrayée, dans laquelle il permet à ladite courroie de patiner sur l'une desdites poulies,
l'équipement de travail comprenant également un élément de frein mobile entre :
- une position de freinage, dans laquelle il freine ladite poulie menée,
- une position de retrait, dans laquelle il ne freine pas ladite poulie menée,
dans lequel, selon l'invention, lesdits éléments de frein et d'embrayage sont connectés de telle sorte que le mouvement dudit élément d'embrayage de sa position débrayée à sa position embrayée se décompose en deux phases successives :
- une première phase dans laquelle il entraine le passage de l'élément de frein de la position de freinage à la position de retrait, et
- une seconde phase dans laquelle il n'entraine pas de mouvement sensible dudit élément de frein, qui reste dans ladite position de retrait.

Ainsi, le mouvement de l'élément d'embrayage entraine un mouvement discontinu de l'élément de frein. Le début du mouvement d'embrayage entraine un retrait complet du frein, alors que la suite du mouvement d'embrayage n'entraine aucun mouvement du frein, qui reste en position de retrait.

De cette façon, le freinage, et le retrait du frein, peuvent être effectués de façon efficace indépendamment des réglages du levier d'embrayage, ce qui améliore la sécurité de l'utilisateur et la fiabilité de l'équipement. Par ailleurs, si le début du mouvement d'embrayage nécessite un effort relativement important de l'utilisateur, pour relâcher le frein, la suite de ce mouvement, de même que le maintien en position embrayée, ne nécessitent qu'un effort réduit. Le confort de l'utilisateur est ainsi amélioré.

Avantageusement, l'équipement de travail comprend des moyens de sélection de ladite position embrayée parmi une plage de positions, en fonction du niveau de tension de ladite courroie.

Ces moyens peuvent être constitués par un ressort, par exemple associé au câble de commande de l'embrayage, permettant de placer l'élément d'embrayage dans la position d'embrayage la mieux adaptée en fonction du niveau de tension de ladite courroie. Cette sélection de la position la mieux adaptée est facilitée par l'effort réduit que nécessite le déplacement de l'élément d'embrayage entre deux positions, dans la seconde phase du mouvement vers la position embrayée.

De préférence, l'élément d'embrayage comprend un levier d'embrayage mobile en rotation entre ladite position embrayée et ladite position débrayée, et portant un galet tendeur venant en contact avec ladite courroie.

De préférence, l'élément de frein comprend un levier de frein mobile en rotation entre ladite position de freinage et ladite position de retrait, et portant un patin de frein venant en contact avec ladite poulie menée.

Selon l'invention, ledit élément d'embrayage présente une came, et ledit élément de frein présente un suiveur venant en contact avec ladite came.

Ce mode de réalisation permet de mettre en œuvre facilement les déplacements des éléments d'embrayage et de freinage selon l'invention.

Selon l'invention, ledit élément de frein présente une came, et ledit élément d'embrayage présente un suiveur venant en contact avec ladite came.

Cet autre mode de réalisation constitue une alternative qui, comme le sait l'homme du métier, permet également de mettre en œuvre les déplacements des éléments d'embrayage et de freinage selon l'invention.

D'après l'invention, la portion de ladite came parcourue par ledit suiveur pendant le mouvement dudit élément d'embrayage de sa position débrayée vers sa position embrayée présente deux portions successives :
- une première portion présentant une forme telle que ce mouvement entraine le passage dudit élément de frein de sa position de freinage à sa position de retrait, et
- une seconde portion présentant une forme telle que ce mouvement n'entraine pas de mouvement sensible dudit élément de frein, qui reste dans ladite position de retrait.

Avantageusement, ledit suiveur est constitué par un doigt mobile en rotation par rapport audit élément de frein ou audit élément d'embrayage.

De préférence, ledit élément d'embrayage et ledit élément de frein sont montés mobiles sur une même structure porteuse.

Cette structure porteuse, qui de préférence porte également les points de fixations de ressorts et des câbles de commande agissant sur les éléments de frein et d'embrayage, constitue un support technique qui assure un bon positionnement relatif de ces différents composants. La fiabilité du mécanisme est ainsi améliorée.

Selon un mode de réalisation préférentiel de l'invention, l'équipement de travail constitue une motofaucheuse, ledit outil mobile étant constitué par une lame de coupe.

L'invention apporte en effet un avantage particulier pour les motofaucheuses, qui doivent répondre à des normes de sécurité très strictes. Elle peut cependant s'appliquer également à d'autres équipements de travail motorisé à conducteur marchant présentant les mêmes contraintes.

La présente invention concerne également un dispositif d'embrayage et de freinage pour un équipement de travail motorisé à conducteur marchant d'après la revendication 8.

### 5. Liste des figures

La présente invention sera mieux comprise à la lecture de la description suivante de modes de réalisation préférés, donnés à titre illustratif et non limitatif, et accompagnés de figures, parmi lesquelles :
- la figure 1 est une vue en perspective d'une motofaucheuse selon un mode de réalisation de l'invention ;
- les figures 2A et 2B sont respectivement une vue de dessus et une vue de côté du système de transmission de la motofaucheuse de la figure 1, dans sa position débrayée ;
- la figure 3 est une vue de dessus du système de transmission de la motofaucheuse de la figure 1 dans une position partiellement embrayée ;
- la figure 4 est une vue de dessus du système de transmission de la motofaucheuse de la figure 1 dans une position complètement embrayée ;
- les figures 5 à 7 sont des vues de dessus des leviers d'embrayage et de freins du système de transmission de la motofaucheuse de la figure 1, respectivement dans des positions correspondants à celles des figures 2a, 3 et 4 ;
- la figure 8 est une vue de côté de la motofaucheuse de la figure 1 dans une position permettant une forte hauteur de coupe ;
- la figure 9 est une vue de côté de la motofaucheuse de la figure 1 dans une position permettant une faible hauteur de coupe.

### 6. Description d'un mode de réalisation de l'invention

### 6.1. Moto faucheuse

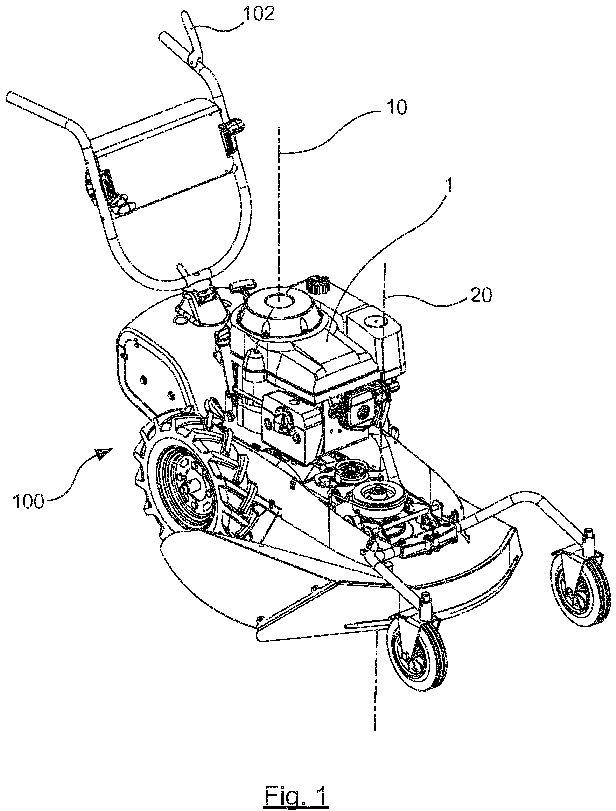

La figure 1 représente une motofaucheuse 100 selon un mode de réalisation préférentiel de l'invention. Cette motofaucheuse 100 comporte un châssis porté par des roues, sur lequel est monté un moteur 1 tournant autour d'un axe 10 sensiblement vertical. Ce moteur, par l'intermédiaire d'une transmission à courroie, entraîne des lames de coupe 2 (non visibles sur la figure 1) tournant sous le châssis autour d'un axe 20 sensiblement vertical.

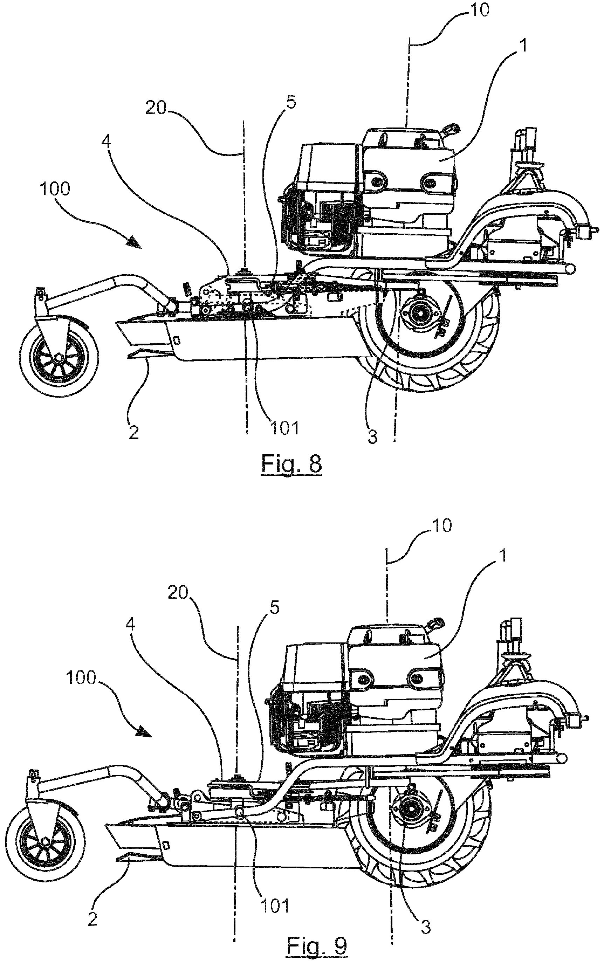

La moto faucheuse 100 est également représentée en vue de côté sur les figures 8 et 9. Sur la figure 8, cette motofaucheuse 100 est représentée dans une configuration dans laquelle les lames de coupe 2 sont placées à une hauteur relativement importante du sol, pour permettre une hauteur de coupe importante. Au contraire, sur la figure 9, cette moto faucheuse 100 est représentée dans une configuration dans laquelle les lames de coupe 2 sont à une hauteur plus faible du sol, pour permettre une hauteur de coupe plus faible. Le passage de l'une de ces configurations à l'autre se fait par un changement de géométrie du châssis de la motofaucheuse 100, dont la partie avant et la partie arrière peuvent pivoter l'une par rapport à l'autre, autour d'un axe transversal 101. L'utilisateur peut ainsi régler facilement la hauteur de coupe, par exemple en actionnant un levier de réglage situé au niveau du guidon.

La modification de la hauteur de coupe entraîne une modification des positions relatives de l'axe 10 du moteur 1 et de l'axe 20 de rotation des lames 2. Ainsi, comme le montre les figures 8 et 9, l'angle entre ces deux axes varie légèrement. Par ailleurs, l'entraxe entre la poulie d'entrainement 3 liée à l'arbre du moteur et la poulie menée 4 liée aux lames 2 varie également. En conséquence, la tension de la courroie 5 entraînée par la poulie d'entrainement 3 et entraînant la poulie menée 4 est susceptible de varier entre ces deux configurations de la motofaucheuse.

Il est à noter également que la longueur de la courroie d'entraînement tente à augmenter avec l'usure de cette courroie. Le niveau de tension de la courroie 5 est donc susceptible d'évoluer au cours de la vie de la motofaucheuse 100, indépendamment des modifications de configuration de cette motofaucheuse pour modifier la hauteur de coupe. La transmission par courroie de la motofaucheuse doit donc s'adapter à ces variations de niveau de tension de la courroie.

### 6.2. Mécanisme d'embrayage

Sur la figure 1, une poignée de commande d'embrayage 102 est visible sur l'une des poignées de guidage de la moto faucheuse 100. Cette poignée de commande 102 permet, par l'intermédiaire d'un câble 103 (non représenté sur la figure 1), de commander un mécanisme d'embrayage de la transmission par courroie. Pour assurer la sécurité de l'utilisateur, les lames 2 ne sont ainsi entraînées par le moteur 1 que quand dans cette poignée 102 est actionnée, et sont freinées, de préférence en moins de cinq secondes, quand cette poignée 102 est relâchée.

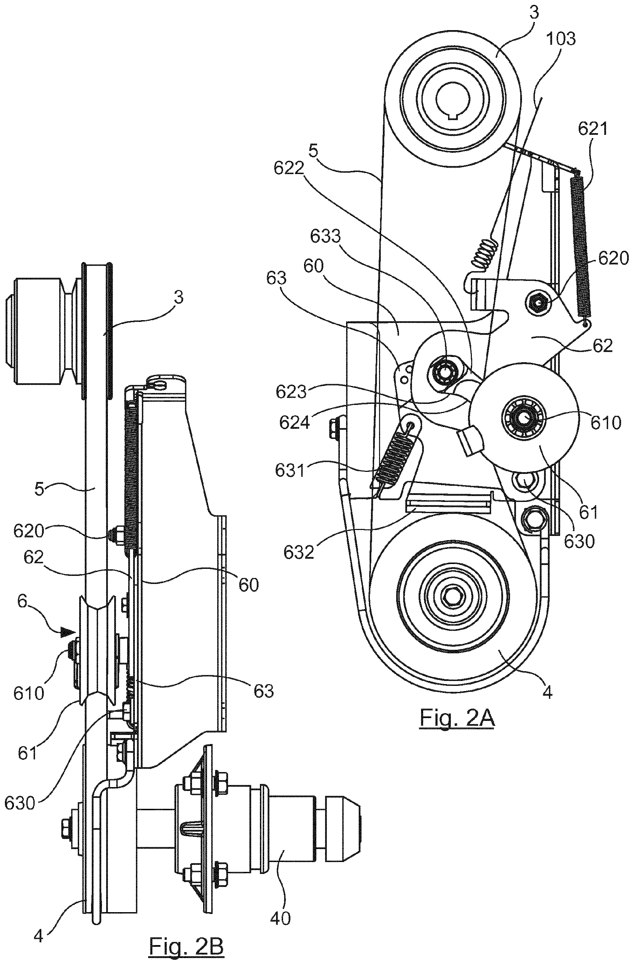

Les figures 2A, 2B, 3 et 4 représentent la transmission par courroie et le mécanisme d'embrayage permettant un embrayage et un freinage efficaces, malgré les variations de tension de la courroie 5. Sur ces figures, on peut voir la poulie d'entrainement 3, qui est assemblée à l'arbre de sortie du moteur 1, la poulie menée 4, qui est liée à l'axe 40 portant les lames de coupe 2 et la courroie 5, qui est engagée sur ces deux poulies 3 et 4. Un mécanisme d'embrayage et de freinage 6, porté par une plaque 60, permet, en fonction de la position de la poignée de commande 102, de tendre la courroie 5 suffisamment pour mettre la poulie 4 en prise avec la poulie 3, ou au contraire de laisser cette courroie 5 détendue pour qu'elle patine sur les poulies et ne transmette plus à la poulie 4 le mouvement de la poulie 3.

### 6.3. Levier d'embrayage

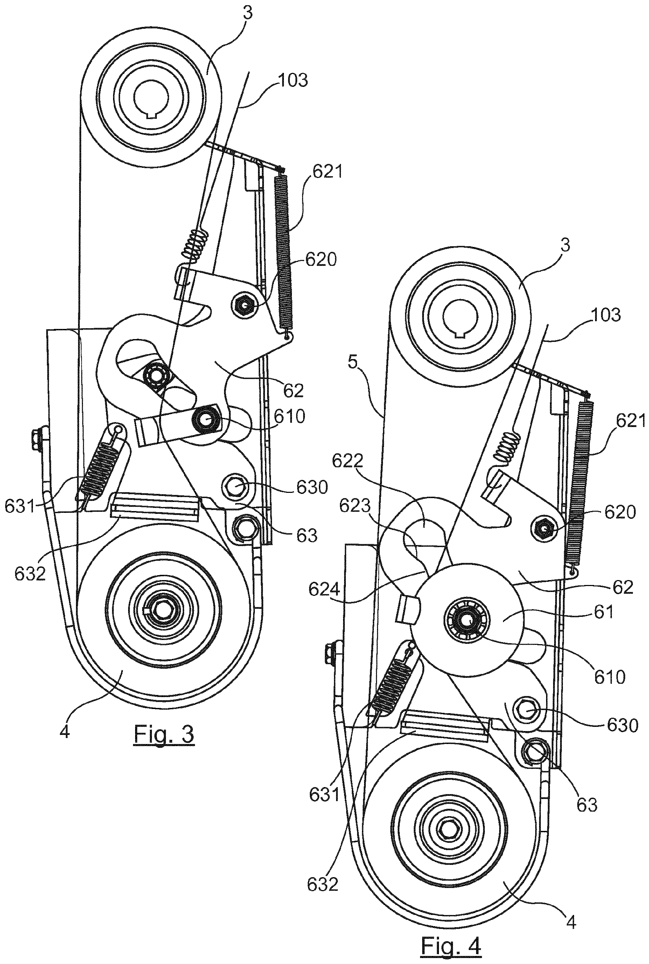

Les figures 2A et 2B montrent ce mécanisme d'embrayage et de freinage 6 dans une position débrayée. Ce mécanisme d'embrayage et de freinage 6 comporte un élément mobile d'embrayage constitué par un galet de tension 61 (non représenté sur la figure 3, pour des raisons de clarté) monté pivotant sur un axe 610 porté par un levier d'embrayage 62. Ce levier d'embrayage 62 est lui-même monté pivotant sur la plaque 60, autour d'un axe 620. Sa position est contrôlée d'une part par un ressort de traction 621, qui tend à le faire tourner dans le sens antihoraire, et d'autre part par le câble d'embrayage 103, qui est relié à la poignée de commande 102. L'actionnement de cette poignée de commande 102 entraîne une traction sur le câble 103, qui fait tourner le levier d'embrayage 62 dans le sens horaire.

Les figures 2A et 2B montrent, respectivement en vue de dessus et en vue de côté, le mécanisme d'embrayage et de freinage 6 quand la poignée de commande 102 n'est pas actionnée. Dans cette position, le câble d'embrayage 103 n'exerce pas de tension et le ressort 621 tire le levier d'embrayage 62 dans le sens antihoraire jusqu'à une position de butée. Le galet de tension 61 porté par le levier d'embrayage 62 est alors dans une position dans laquelle il n'exerce qu'une faible tension sur la courroie 5, insuffisante pour empêcher le patinage de cette courroie 5 sur les poulies 3 et 4. Les lames 2 de la motofaucheuse 100 sont ainsi débrayées.

Au contraire, dans les configurations représentées par les figures 3 et 4, la poignée 102 est actionnée par l'utilisateur, ce qui entraîne une tension du câble d'embrayage 103. La traction de ce câble d'embrayage 103 fait tourner le levier d'embrayage 62 dans le sens horaire, en étirant le ressort 621. Ce déplacement entraîne le déplacement du galet 61 jusqu'à une position embrayée dans laquelle il allonge le trajet de la courroie 5, de façon à la tendre suffisamment pour qu'elle ne patine plus sur les poulies 3 et 4. Ces deux poulies sont alors en prise par l'intermédiaire de la courroie 5, ce qui permet l'entrainement en rotation des lames 2 par le moteur 1.

Les positions du levier d'embrayage 62 représentées par la figure 3 et la figure 4 correspondent chacune à une position embrayée adaptée à un niveau de tension initial de la courroie 5. Ainsi, la position représentée à la figure 3 correspond à une position embrayée adaptée pour une courroie qui présente naturellement un niveau de tension initiale relativement élevé, par exemple parce que cette courroie est neuve ou parce que l'entraxe entre les poulies 3 et 4 est relativement importante. Au contraire, la position représentée à la figure 4, dans laquelle le galet impose un trajet plus long à la courroie 5, correspond à une position embrayée adaptée pour une courroie présentant naturellement un niveau de tension initiale plus faible, par exemple parce que cette courroie est usée et distendue, ou parce que l'entraxe entre les poulies 3 et 4 est relativement faible. Lorsque l'utilisateur actionne la poignée 102, un ressort compensateur situé sur le câble d'embrayage 103 permet que ce câble exerce sur le levier 62 un effort adapté pour que ce levier exerce lui-même une tension suffisante sur la courroie. La position d'embrayage que prend alors le levier 62 est une position parmi une plage de positions d'embrayage possibles, adaptée à l'état de tension initiale réelle de la courroie 5.

### 6.4. Levier de frein

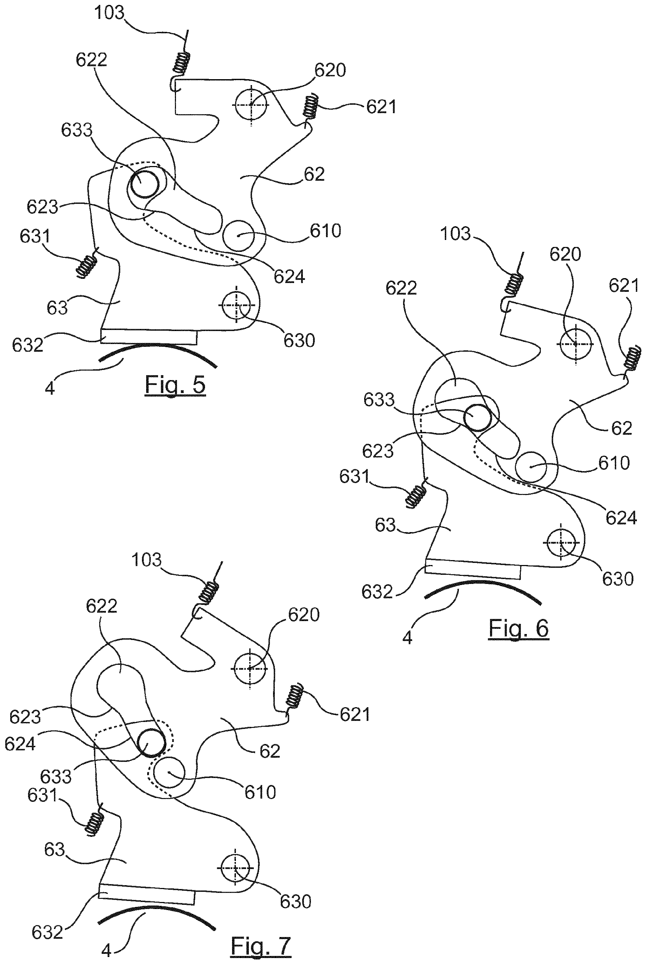

La plaque 60 porte également un levier de frein 63 qui est pivotant autour d'un axe 630. Un ressort de traction 631 tend à faire tourner ce levier 63 dans le sens antihoraire. Les positions des leviers 62 et 63, dans les configurations représentées respectivement aux figures 2A, 3 et 4, sont représentées respectivement sur les figures 5, 6 et 7.

Le levier de frein 63 porte un patin de frein 632. Dans la configuration représentée par les figures 2A et 5, dans laquelle les lames 2 sont débrayées, le levier de freins 63, entraîné par le ressort 631, est dans une position de freinage dans laquelle le patin de frein 632 est plaqué contre la poulie 4. Ainsi, quand la poignée de commande d'embrayage 102 est relâchée, un freinage efficace est exercé par le levier de freins 63, sous l'action du ressort 631.

Le levier de freins 63 porte un doigt 633, qui est engagé dans une lumière 622 du levier d'embrayage 62. Pour permettre une circulation aisée du doigt dans la lumière 622, ce doigt est formé, dans le mode de réalisation représenté, par un roulement à bille monté sur un axe lié au levier de frein 633. Quand, comme le représente les figures 2A, 2B et 5, le levier d'embrayage 62 est dans sa position débrayée, le doigt 633 se trouve dans une portion large de la lumière 622, de telle sorte qu'il n'est pas en contact avec les bords de cette lumière. Dans cette position, le levier 62 n'exerce aucune action sur le levier 63.

Quand l'utilisateur exerce une action sur la poignée de commande d'embrayage 102, le levier d'embrayage 62 passe de sa position débrayée représentée par les figures 2a et 5 à sa position embrayée, par exemple sa position embrayée représentée par les figures 3 et 6 ou sa position embrayée représentée par les figures 4 et 7. Lors d'une première phase de ce mouvement, le doigt 633 entre en contact avec une première portion 623 du bord de la lumière 622 qui présente un angle tel que le mouvement du levier 62 entraîne un mouvement du levier de freins 63. Plus précisément, le contact de cette portion 623 sur le doigt 633 repousse ce doigt en entraînant le levier de frein 63 en rotation dans le sens horaire. Cette rotation a pour effet, comme le représentent les figures 3 et 6, d'écarter le patin de freins 632 de la poulie 4.

Il est à noter que cette première phase du mouvement nécessite un effort relativement important de l'utilisateur sur la poignée 102, qui doit notamment contrer l'effort du ressort 631 pour écarter le patin de freins 632 de la poulie 4. Cet effort peut être de l'ordre de 35 N.

En revanche, lors d'une deuxième phase de ce mouvement, le doigt 633 arrive en contact avec une seconde portion 624 du bord de la lumière 622, qui présente un angle différent. Plus précisément, sur cette portion, le bord de la lumière 622 en contact avec le doigt 633 est sensiblement alignée avec l'axe de rotation 630 du levier de frein 63. De plus, cette seconde portion 624 présente une forme d'arc de cercle centrée sur l'axe 620 du levier d'embrayage 62. Ainsi le doigt 633 en contact avec cette seconde portion du bord de la lumière 622 ne peut exercer aucune force tendant à faire tourner le levier d'embrayage 62. L'utilisateur n'a donc qu'un effort relativement modéré à fournir pour maintenir le levier d'embrayage 102 dans sa position embrayée, dans la mesure où il n'a pas à contrer l'effort du ressort 631 pour écarter le patin de frein 632 de la poulie 4. Cet effort est généralement inférieur à 5 N.

Par ailleurs, quand le mouvement vers la position débrayée se poursuit dans cette seconde phase pour arriver à une position embrayée adaptée à une courroie naturellement moins tendue, par exemple à la position représentée à la figure 4, ce mouvement n'entraine pas de mouvement sensible du levier de frein 63, du fait de la forme et de l'orientation de cette seconde portion 624 du bord de la lumière 622. En conséquence, ce mouvement nécessite un effort relativement modéré.

Ainsi, lors du mouvement du levier d'embrayage, la première portion 623 et la seconde portion 624 du bord de la lumière 622 constituent une came, c'est à dire un organe mécanique constituant une mémoire et destiné à restituer un mouvement de translation ou de rotation (en l'occurrence la rotation du levier de frein) synchrone par rapport à un mouvement moteur (en l'occurrence le mouvement de rotation du levier d'embrayage). Le doigt 633 constitue alors le suiveur de cette came.

Il est à noter que, pour le bon fonctionnement du mécanisme d'embrayage et de frein, il est important que les différents ressorts agissant sur les leviers d'embrayage et de frein soient correctement adaptés. Ces ajustements sont réalisés sans difficulté excessive par l'homme du métier.

La motofaucheuse selon l'invention permet donc un confort plus important de l'utilisateur, dans la mesure où la pression qu'il doit maintenir sur la poignée d'embrayage, pour maintenir les lames embrayées, est relativement réduite. La pression à exercer pour passer d'une position d'embrayage à une autre, dans laquelle la courroie est plus tendue, est également réduite. Par ailleurs, cette motofaucheuse permet une adaptation facile du mécanisme d'embrayage à différents niveaux de tension initiale de la courroie, sans que cette adaptation ait de conséquence sur l'efficacité du freinage de la poulie menée. En effet, le patin de frein occupe une position de freinage quand le levier de d'embrayage est dans sa position débrayée, et une unique position de retrait quand le levier d'embrayage est dans ses différentes positions d'embrayage.
La description ci-dessus présente ma mise en œuvre de l'invention sur une motofaucheuse. L'invention peut également être mise en œuvre par l'homme du métier, sans difficultés particulières, sur d'autres équipements de travail motorisés à conducteur à pied comportant une transmission à courroie entre le moteur et les outils, et comprenant un embrayage associé à un frein des outils, comme par exemple sur des fraises à neige.

## Revendications

1. Equipement de travail (100) motorisé à conducteur marchant comprenant :
- un moteur (1), entraînant en rotation une poulie d'entraînement (3),
- au moins un outil mobile, entrainé par la rotation d'une poulie menée (4),
- au moins une courroie de transmission (5), engagée sur lesdites poulies d'entraînement et menée (3, 4),
l'équipement de travail comprenant également un élément d'embrayage mobile (6) entre :
- une position embrayée, dans laquelle il exerce sur ladite courroie (5) une tension suffisante pour l'empêcher de patiner sur lesdites poulies (3, 4),
- une position débrayée, dans laquelle il permet à ladite courroie de patiner sur l'une desdites poulies (3, 4),
l'équipement de travail comprenant également un élément de frein (632) mobile entre :
- une position de freinage, dans laquelle il freine ladite poulie menée (4),
- une position de retrait, dans laquelle il ne freine pas ladite poulie menée (4),
**caractérisé en ce qu'**il comporte une came (623, 624) en contact avec un suiveur (633) placé sur l'élément de frein (632) ou sur l'élément d'embrayage et que lesdits éléments de frein (632) et d'embrayage sont connectés de telle sorte que le mouvement dudit élément d'embrayage (6) de sa position débrayée à sa position embrayée se décompose en deux phases successives :
- une première phase dans laquelle il entraine le passage de l'élément de frein (632) de la position de freinage à la position de retrait, et
- une seconde phase dans laquelle il n'entraine pas de mouvement sensible dudit élément de frein (632), qui reste dans ladite position de retrait,
la portion de ladite came (623,624) parcourue par ledit suiveur (633) pendant le mouvement dudit élément d'embrayage de sa position débrayée vers sa position embrayée présente deux portions successives :
- une première portion (623) présentant une forme telle que ce mouvement entraine le passage dudit élément de frein (632) de sa position de freinage à sa position de retrait, et
- une seconde portion (624) présentant une forme telle que ce mouvement n'entraine pas de mouvement sensible dudit élément de frein (632), qui reste dans ladite position de retrait.

2. Equipement de travail selon la revendication 1, **caractérisé en ce qu'**il comprend des moyens de sélection (62) de ladite position embrayée parmi une plage de positions, en fonction du niveau de tension de ladite courroie (5).

3. Equipement de travail selon l'une quelconque des revendications 1 et 2, **caractérisé en ce que** ledit élément d'embrayage comprend un levier d'embrayage (62) mobile en rotation entre ladite position embrayée et ladite position débrayée, et portant un galet (61) tendeur venant en contact avec ladite courroie.

4. Equipement de travail selon l'une quelconque des revendications 1 à 3, **caractérisé en ce que** ledit élément de frein (632) comprend un levier de frein (63) mobile en rotation entre ladite position de freinage et ladite position de retrait, et portant un patin de frein (632) venant en contact avec ladite poulie menée.

5. Equipement de travail selon l'une quelconque des revendications précédentes, **caractérisé en ce que** ledit suiveur (633) est constitué par un doigt mobile en rotation par rapport audit élément de frein ou audit élément d'embrayage.

6. Equipement de travail selon l'une quelconque des revendications précédentes, **caractérisé en ce que** ledit élément d'embrayage et ledit élément de frein sont montés mobiles sur une même structure porteuse.

7. Equipement de travail selon l'une quelconque des revendications précédentes, **caractérisé en ce qu'**il constitue une motofaucheuse, ledit outil mobile étant constitué par une lame de coupe.

8. Dispositif d'embrayage et de freinage pour un équipement de travail motorisé à conducteur marchant, ledit équipement de travail motorisé comprenant un moteur (1), entraînant en rotation une poulie d'entrenaiment (3), au moins un outil mobile, entraîné par la rotation d'une poulie menée (4), au moins une courroie de transmission (5), engagée sur lesdites poulies d'entrainement et menée (3. 4), ledit dispositif d'embrayage et de freinage comprenant un élément d'embrayage (6) et un élément de frein (632) montés mobiles sur une même structure porteuse, ledit élément d'embrayage (6) étant mobile entre :
- au moins une position embrayée, dans laquelle il peut exercer sur ladite courroie de transmission dudit équipement une tension suffisante pour l'empêcher de patiner sur lesdites poulies (3, 4) sur lesquelles elle est susceptible d'être engagée,
- une position débrayée, dans laquelle il permet à ladite courroie de patiner sur l'une desdites poulies (3, 4),
ledit élément de frein (632) étant mobile entre :
- une position de freinage, dans laquelle il peut freiner l'une desdites poulies (3, 4),
- une position de retrait, dans laquelle il ne peut pas freiner ladite poulie (3, 4),
**caractérisé en ce que** ledit dispositif comporte une came (623,624) en contact avec un suiveur (633) placé sur l'élément de frein (632) ou sur l'élément d'embrayage (6) et lesdits éléments de frein (632) et d'embrayage (6) étant connectés de telle sorte que le mouvement dudit élément d'embrayage de sa position débrayée à sa position embrayée se décompose en deux phases successives :
- une première phase dans laquelle il entraine le passage de l'élément de frein (632) de la position de freinage à la position de retrait, et
- une seconde phase dans laquelle il n'entraine pas de mouvement sensible dudit élément de frein (632), qui reste dans ladite position de retrait
la portion de ladite came (623, 624) parcourue par ledit suiveur (633) pendant le mouvement dudit élément d'embrayage de sa position débrayée vers sa position embrayée présentant deux portions successives :
- une première portion (623) présentant une forme telle que ce mouvement entraine le passage dudit élément de frein (632) de sa position de freinage à sa position de retrait, et
- une seconde portion (624) présentant une forme telle que ce mouvement n'entraine pas de mouvement sensible dudit élément de frein (632), qui reste dans ladite position de retrait.

## Patentansprüche

1. Handgeführte, motorisierte Arbeitsausrüstung (100), die Folgendes beinhaltet:
- einen Motor (1), der eine Antriebsscheibe (3) rotierend antreibt,
- mindestens ein bewegbares Werkzeug, das durch die Rotation einer Abtriebsscheibe (4) angetrieben wird,
- mindestens einen Transmissionsriemen (5), der mit der Antriebs- und der Abtriebsscheibe (3, 4) im Eingriff ist,
wobei die Arbeitsausrüstung ferner ein Kupplungselement (6) beinhaltet, das zwischen Folgendem bewegbar ist:
- einer eingekuppelten Position, in der es eine ausreichende Spannung auf den Riemen (5) ausübt, um diesen davon abzuhalten, auf den Scheiben (3, 4) zu rutschen,
- einer ausgekuppelten Position, in der es dem Riemen gestattet, auf einer der Scheiben (3, 4) zu rutschen,
wobei die Arbeitsausrüstung ferner ein Bremselement (632) beinhaltet, das zwischen Folgendem bewegbar ist:
- einer Bremsposition, in der es die Abtriebsscheibe (4) bremst,
- einer Rückzugsposition, in der es die Abtriebsscheibe (4) nicht bremst,
**dadurch gekennzeichnet, dass** sie eine Kurvenscheibe (623, 624) umfasst, die mit einem Nachfolgeelement (633), das auf dem Bremselement (632) oder auf dem Kupplungselement angeordnet ist, in Kontakt ist, und dass das Bremselement (632) und das Kupplungselement so verbunden sind, dass sich die Bewegung des Kupplungselements von seiner ausgekuppelten Position in seine eingekuppelte Position in zwei aufeinanderfolgende Phasen unterteilt:
- eine erste Phase, in der es den Übergang des Bremselements (632) von der Bremsposition in die Rückzugsposition verursacht, und
- eine zweite Phase, in der es keine wesentliche Bewegung des Bremselements (632) verursacht, welches in der Rückzugsposition verbleibt,
wobei der Abschnitt der Kurvenscheibe (623, 624), der während der Bewegung des Kupplungselements von seiner ausgekuppelten Position in seine eingekuppelte Position von dem Nachfolgeelement (633) durchlaufen wird, zwei aufeinanderfolgende Abschnitte aufweist:
- einen ersten Abschnitt (623), der eine solche Form aufweist, dass diese Bewegung den Übergang des Bremselements (632) von seiner Bremsposition in seine Rückzugsposition verursacht, und
- einen zweiten Abschnitt (624), der eine solche Form aufweist, dass diese Bewegung keine wesentliche Bewegung des Bremselements (632) verursacht, welches in der Rückzugsposition verbleibt.

2. Arbeitsausrüstung nach Anspruch 1, **dadurch gekennzeichnet, dass** sie Mittel (62) zum Auswählen der eingekuppelten Position aus einem Bereich von Positionen in Abhängigkeit von dem Spannungsniveau des Riemens (5) beinhaltet.

3. Arbeitsausrüstung nach einem der Ansprüche 1 und 2, **dadurch gekennzeichnet, dass** das Kupplungselement einen Kupplungshebel (62) beinhaltet, der zwischen der eingekuppelten Position und der ausgekuppelten Position rotierend bewegbar ist und eine Spannrolle (61) trägt, die mit dem Riemen in Kontakt kommt.

4. Arbeitsausrüstung nach einem der Ansprüche 1 bis 3, **dadurch gekennzeichnet, dass** das Bremselement (632) einen Bremshebel (63) beinhaltet, der zwischen der Bremsposition und der Rückzugsposition rotierend bewegbar ist und einen Bremsklotz (632) trägt, der mit der Abtriebsscheibe in Kontakt kommt.

5. Arbeitsausrüstung nach einem der vorhergehenden Ansprüche, **dadurch gekennzeichnet, dass** das Nachfolgeelement (633) durch einen Finger gebildet wird, der in Bezug auf das Bremselement oder das Kupplungselement rotierend bewegbar ist.

6. Arbeitsausrüstung nach einem der vorhergehenden Ansprüche, **dadurch gekennzeichnet, dass** das Kupplungselement und das Bremselement an einer gleichen Tragstruktur bewegbar montiert sind.

7. Arbeitsausrüstung nach einem der vorhergehenden Ansprüche, **dadurch gekennzeichnet, dass** sie einen Motormäher bildet, wobei das bewegbare Werkzeug durch ein Schneidmesser gebildet wird.

8. Kupplungs- und Bremsvorrichtung für eine handgeführte, motorisierte Arbeitsausrüstung, wobei die motorisierte Arbeitsausrüstung einen Motor (1), der eine Antriebsscheibe (3) rotierend antreibt, mindestens ein bewegbares Werkzeug, das durch die Rotation einer Abtriebsscheibe (4) angetrieben wird, mindestens einen Transmissionsriemen (5), der mit der Antriebs- und der Abtriebsscheibe (3, 4) im Eingriff ist, beinhaltet, wobei die Kupplungs- und Bremsvorrichtung ein Kupplungselement (6) und ein Bremselement (632) beinhaltet, die an einer gleichen Tragstruktur bewegbar montiert sind, wobei das Kupplungselement (6) zwischen Folgendem bewegbar ist:
- mindestens einer eingekuppelten Position, in der es eine ausreichende Spannung auf den Transmissionsriemen der Ausrüstung ausüben kann, um diesen davon abzuhalten, auf den Scheiben (3, 4), mit denen er in Eingriff sein kann, zu rutschen,
- einer ausgekuppelten Position, in der es dem Riemen gestattet, auf einer der Scheiben (3, 4) zu rutschen,
wobei das Bremselement (632) zwischen Folgendem bewegbar ist:
- einer Bremsposition, in der es eine der Scheiben (3, 4) bremsen kann,
- einer Rückzugsposition, in der es die Scheibe (3, 4) nicht bremsen kann,
**dadurch gekennzeichnet, dass** die Vorrichtung eine Kurvenscheibe (623, 624) umfasst, die mit einem Nachfolgeelement (633), das auf dem Bremselement (632) oder auf dem Kupplungselement (6) angeordnet ist, in Kontakt ist, und wobei das Bremselement (632) und das Kupplungselement (6) so verbunden sind, dass sich die Bewegung des Kupplungselements von seiner ausgekuppelten Position in seine eingekuppelte Position in zwei aufeinanderfolgende Phasen unterteilt:
- eine erste Phase, in der es den Übergang des Bremselements (632) von der Bremsposition in die Rückzugsposition verursacht, und
- eine zweite Phase, in der es keine wesentliche Bewegung des Bremselements (632) verursacht, welches in der Rückzugsposition verbleibt,
wobei der Abschnitt der Kurvenscheibe (623, 624), der während der Bewegung des Kupplungselements von seiner ausgekuppelten Position in seine eingekuppelte Position von dem Nachfolgeelement (633) durchlaufen wird, zwei aufeinanderfolgende Abschnitte aufweist:
- einen ersten Abschnitt (623), der eine solche Form aufweist, dass diese Bewegung den Übergang des Bremselements (632) von seiner Bremsposition in seine Rückzugsposition verursacht, und
- einen zweiten Abschnitt (624), der eine solche Form aufweist, dass diese Bewegung keine wesentliche Bewegung des Bremselements (632) verursacht, welches in der Rückzugsposition verbleibt.

## Claims

1. Walk-behind powered work equipment (100) comprising :
- a motor (1), rotatably driving a driving belt (3),
- at least one mobile tool, driven by the rotation of a driven pulley (4),
- at least one transmission belt (5), engaged on said driving and driven pulleys (3, 4),
wherein the work equipment also comprises a clutch element (6) movable between:
- an engaged position, in which it exerts sufficient tension upon said belt (5) to prevent it from slipping upon said pulleys (3, 4),
- a disengaged position, in which it allows said belt to slip upon one of said pulleys (3, 4),
wherein the work equipment also comprises a brake element (632) movable between:
- a braking position, in which it brakes said driven pulley (4),
- a retracted position, in which it does not brake said driven pulley (4),
**characterised in that** it comprises a cam (623, 624) in contact with a follower (633) placed on the brake element (632) or on the clutch element and that said brake element (632) and said clutch element (6) are connected such that the movement of said clutch element (6) from its disengaged position to its engaged position comprises two successive phases:
- a first phase in which it causes the movement of the brake element (632) from the braking position to the retracted position, and
- a second phase in which it does not cause any significant movement of said brake element (632), which remains in said retracted position,
wherein the portion of said cam (623, 624) traversed by said follower (633) during the movement of said clutch element from its disengaged position to its engaged position has two successive portions:
- a first portion (623) having a shape such that this movement causes said brake element (632) to move from its braking position to its retracted position, and a
- second portion (624) having a shape such that this movement does not cause any appreciable movement of said brake element (632), which remains in said retracted position.

2. Work equipment according to claim 1, **characterised in that** it comprises means (62) for the selection of said engaged position from among a range of positions, as a function of the tension level of said belt (5).

3. Work equipment according to any one of claims 1 and 2, **characterised in that** said clutch element comprises a clutch lever (62) rotatable between said engaged and disengaged positions, and carrying a tensioning roller (61) coming into contact with said belt.

4. Work equipment according to any one of claims 1 to 3, **characterised in that** said brake element (632) comprises a brake lever (63) rotatable between said braking position and said retracted position, and carrying a brake pad (632) coming into contact with said driven pulley.

5. Work equipment according to any one of the preceding claims, **characterised in that** said follower (633) is constituted by a finger rotatable with respect to said brake element or said clutch element.

6. Work equipment according to any one of the preceding claims, **characterised in that** said clutch element and said brake element are movably mounted on the same supporting structure.

7. Work equipment according to any one of the preceding claims, **characterised in that** it constitutes a motor mower, said mobile tool being constituted by a cutting blade.

8. Clutch and brake device for walk-behind powered work equipment, said powered work equipment comprising a motor (1), rotatably driving a transmission belt (3), at least one mobile tool, driven by the rotation of a driven pulley (4), at least one transmission belt (5), engaged on said driving and driven pulleys (3, 4), wherein said clutch and brake device comprises a clutch element (6) and a brake element (632) movably mounted on the same supporting structure, said clutch element (6) being movable between:
- at least one engaged position, in which it can exert upon said transmission belt of said equipment a tension sufficient to prevent it from slipping on said pulleys (3, 4) upon which it is capable of being engaged,
- a disengaged position, in which it allows said belt to slip upon one of said pulleys (3, 4),
wherein said brake element (632) is movable between:
- a braking position, in which it can brake one of said pulleys (3, 4),
- a retracted position, in which it cannot brake said pulley (3, 4),
**characterised in that** said device comprises a cam (623, 624) in contact with a follower (633) placed on the brake element (632) or on the clutch element (6), and wherein said brake (632) and clutch (6) elements are connected in such a way that the movement of said clutch element from its disengaged position to its engaged position is broken down into two phases
- a first phase in which it causes the movement of the brake element (632) from the braking position to the retracted position, and
- a second phase in which it does not cause any significant movement of said brake element (632), which remains in said retracted position
wherein the portion of said cam (623, 624) traversed by said follower (633) during the movement of said clutch element from its disengaged position to its engaged position has two successive portions
- a first portion (623) having a shape such that this movement causes said brake element (632) to move from its braking position to its retracted position, and
- a second portion (624) having a shape such that this movement does not cause any significant movement of said brake element (632), which remains in said retracted position.
